# EUROPEAN PATENT APPLICATION

(11) **EP 1 143 340 A1**
(43) Date of publication of application: **10.10.2001**
(21) Application number: 99957650.7
(22) Date of filing: 28.06.1999
(51) Int. Cl.: G06F 13/00, G06F 15/00, G06F 17/30

(54) **FUNCTION EXPANDING DEVICE AND FUNCTION EXPANDING METHOD**

(30) Priority: 26.06.1998 JP 19510898
(71) Applicant: Yugen Kaisha Bariafuri, Yokohama-shi, Kanagawa 235-0036 (JP)
(72) Inventor: HAYASHI, Tsuyoshi, Yokohama-shi, Kanagawa 235-0036 (JP)
(74) Representative: Uchida, Kenji
(86) International application number: JP9903451
(87) International publication number: WO0000897

(57) **Abstract**

Conventionally, full-size character such as Kanji cannot be included in the URL path part conforming to the protocols of the HTTP and URL. Even ASCII characters are restricted in use. Therefore, it is impossible or difficult to use a URL including Kanji, Hiragana, Katakana, and symbols. According to the invention, this problem is prevented without much troublesome work. The invention can be used in the URL path part. Therefore, the value as noticing means is significantly heightened. Using this can increase the users of the Internet. By providing a conventional WWW server with a function expanding device including error inducing means for intentionally causing an error and character string processing means, the problem can be solved.

## Description

### TECHNICAL FIELD

This invention relates to a device expanding the function of conventional information processing devices, a method, and a program comprising the method. Especially, it relates to enhancing expressive capability of URLs by interpreting URLs flexibly.

### BACKGROUND ART

FIG. 2 shows an example of using mode of WWW (world-wide web) service (or "Web service") on the Internet. In most cases, WWW servers 210 and WWW clients 202 are connected via networks such as a small size network 204 or a wide area network 208. A WWW relay means 206 which is intended to improve the apparent communication speed may be interposed between the WWW servers 210 and the WWW clients 202. FIG. 6 shows the general composition of the WWW server 210 and related data.

When a WWW service is carried out, both the WWW server 210 and the WWW client 202 execute a service in accordance with a protocol which is defined as HTTP (hyper text transfer protocol) in the documentation called RFC (request for comments).

FIG. 3A is a simplified illustration which shows a communication processing between one WWW server 210 and one WWW client 202. Basically,
(1) the WWW client 202 issues a HTTP request (resource access request based on HTTP) toward the WWW server 210,
(2) the WWW server 210 retern a corresponding resource to the WWW client 202 as a response (HTTP response) of the request.
   In FIG. 4, some URLS are shown. These URLs are used to express that WWW clients want to access resources on WWW servers. URL is a protocol defined as one of RFCs, too.

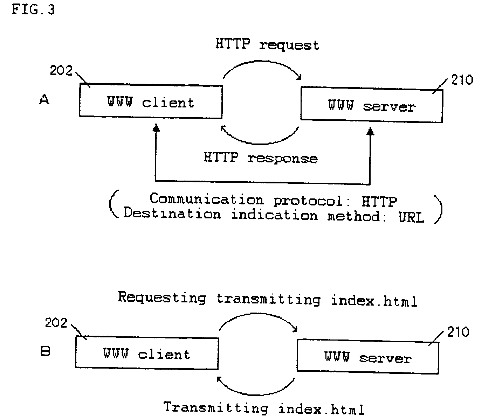

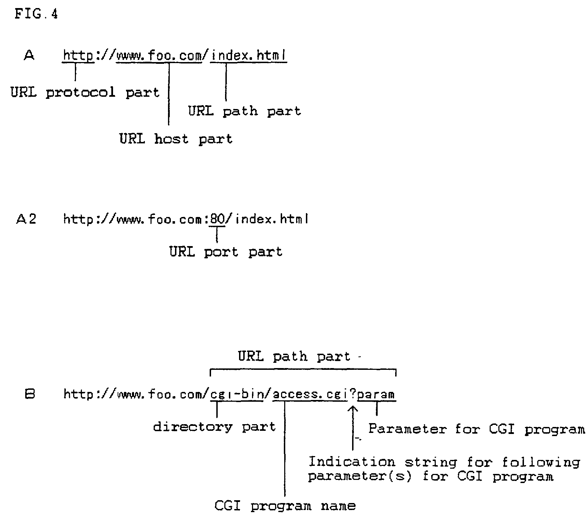

FIG. 3B shows how one WWW client 202 is accessing one HTML (hyper text markup language) file on a WWW server 210. As mentioned in the above,
(1) the WWW client 202 issues a HTTP request based on HTTP (i.e., it is shown in FIG. 4A, a file name "index.html" is placed in the URL path part) toward the WWW server 210,
(2) the WWW server 210 return a index.html to the WWW client 202 as a response.
   As for HTTP, it is also possible to specify not only a request of file sending but also a request of execution of computer programs, a status checking, etc.

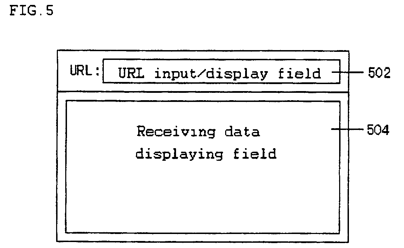

The following is a explanation using a sample screen of a browser (browser is a one of naming of programs which works as a WWW client) shown in FIG. 5. In the explanation, a file is accessed based on above procedures.

(1) FIG. 4A shows a character string as an example. The character string is called "URL". By entering the character string into a "URL input/display field" 502 of a screen interface of a browser and pushing a access-execution key down, the WWW clients 202 transmits the URL toward the WWW server 210 which is specified in the URL host part (reference: FIG. 4A) (and additional information such as a browser's type if any) as a HTTP request. In this example, a URL path part (reference: FIG. 4A) contains a file name as a target of access.

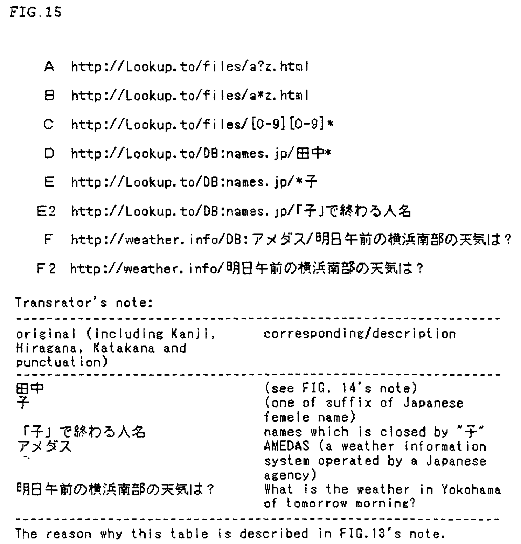

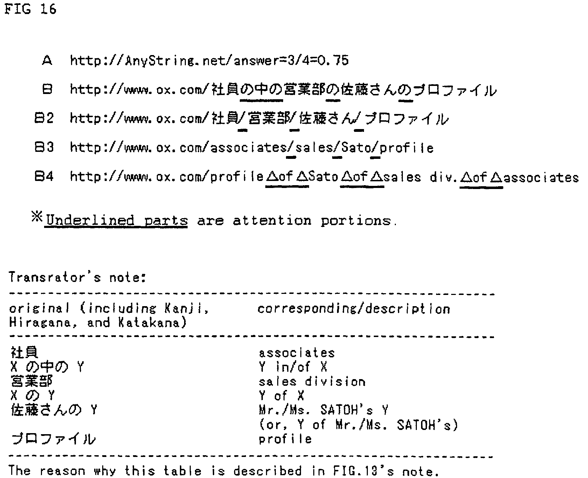

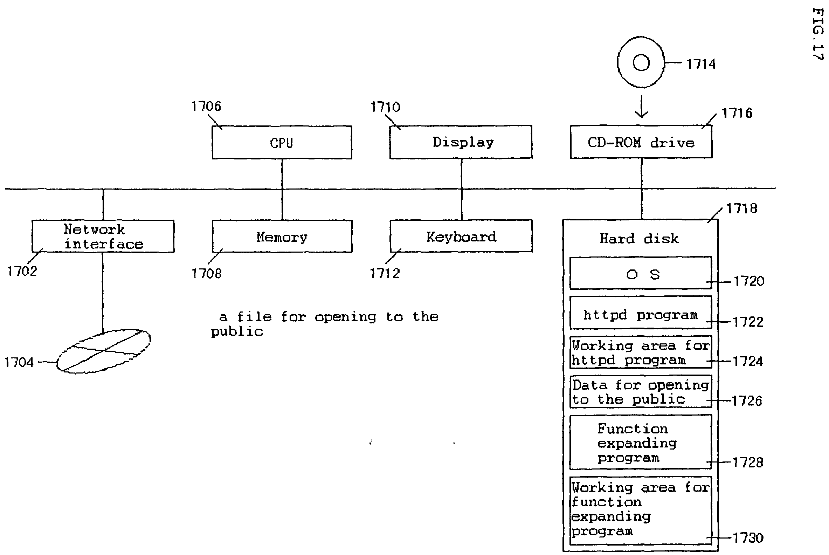

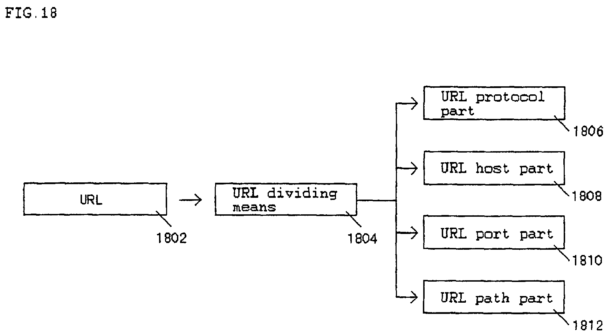

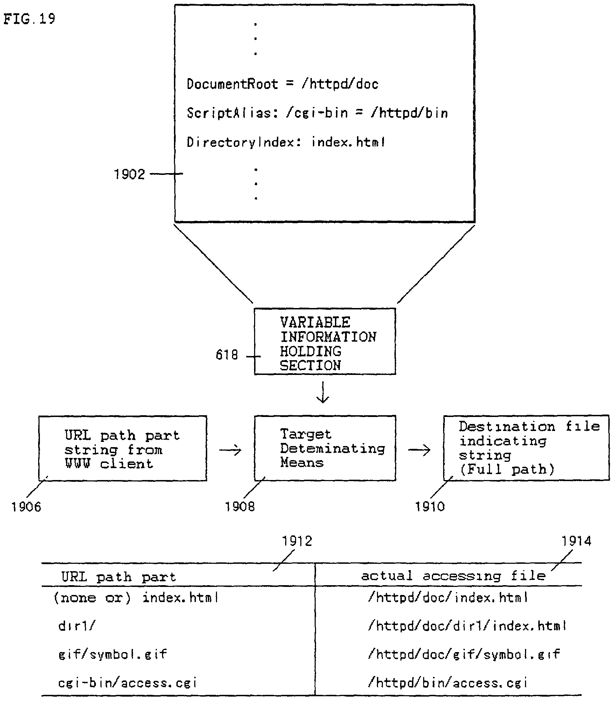

(2) Corresponding to the HTTP request, the WWW server 210 processes the URL and other information appropriately. The URL path part indicates a location of the file as a target of access (reference: FIG. 19).
According to the contents of URL path part, the WWW server reads a corresponding file from a file holding section 620 in the WWW server 210 by using a file accessing section 616 in the WWW server 210.

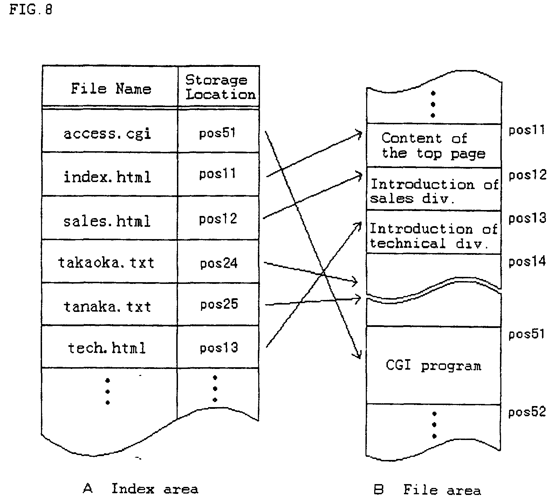

FIG. 8 shows internal structure of file holding section 620 which memorizes files in. In this figure, the following six (6) files are shown as examples:
access.cgi,
index.html,
sales.html,
takaoka.txt,
tanaka.txt,
tech.html.
Other processing such as placing files or deleting file is carried out if necessary.

(3) If reading is done successfully, the WWW server 210 transmits the result (a content of the file) towards the WWW client 202 which is origin of the HTTP request as a HTTP response.

(4) If reading at WWW server 210 is done successfully, the WWW client 202 displays the content at a "receiving data displaying field" 504 according to the file format.

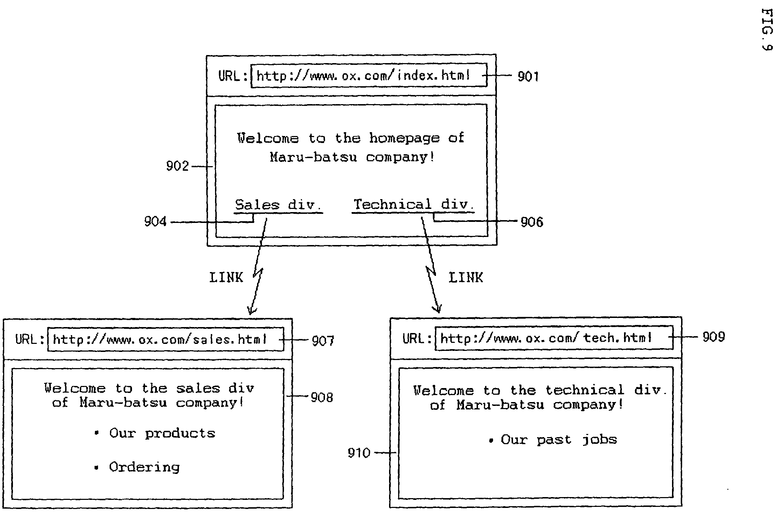

FIG. 9 shows an example of a homepage of "Maru-batsu company" (which is expressed "O× 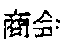 " in the original Japanese application). In this example, the name of "Maru-batsu company" is fictional, and the corresponding domain name of the company is assumed as "ox.com".

A top page screen 902 shows a appearance of the result of access by entering
"http://www.ox.com/index.html"
into the "URL input/display field" 502 in the browser. The screen 902 displays "index.html" (reference: FIG. 8) which is existing at the file holding section 620 in the WWW server 210 under the manner of the HTML about displaying.

Information about links for both sales section and technical section of Maruu-batsu company are described in the file index.html which is corresponding to the top page.
When a link part 904 which is relating to the sales section is clicked etc. by mouse, a sales section's page 908 is displayed. In the same way, when a link part 906 which is relating to the technical section is clicked etc. by mouse, the technical section's page 910 is displayed.
URLs of two pages are http://www.ox.com/sales.html and http://www.ox.com/tech.html respectively.

Above is one of conventional embodiment of WWW services. The Maru-batsu company may be able to construct the homepage which has the contents they hope for the present.

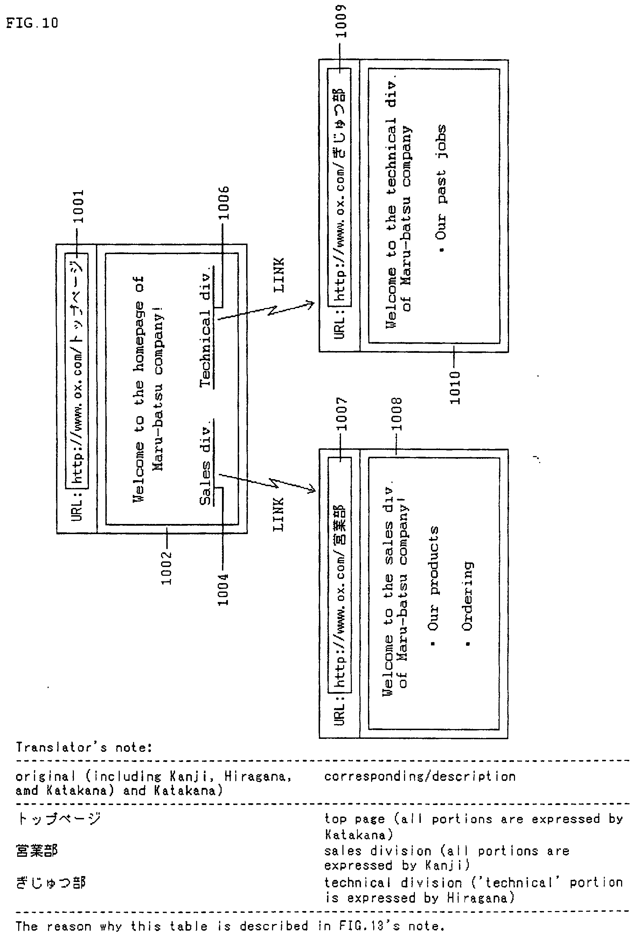

But the conventional URLs conforming to the protocols of the HTTP and the URL (such URL is called "TrURL" (Traditional URL) from now on) can not include full-size characters such as Kanji in its URL path part.
Therefore, it was impossible (or, it was thought so) that Maru-batsu company could not use the URLs which include Kanji, Hiragana, and Katakana even if they would want to use it instead of the expression shown in "URL input/display field" in FIG. 9. Said URLs are indicated as 1001, 1007 and 1009 in "URL input/display field" in FIG. 10.

At least in the article of the magazine of a REFERENCE 1, it was described: "it is impossible to use Japanese within URLs which are displayed at browsers." And, there is no error correction or the like in the later series of the magazine. Because of above reasons, it seems reasonable that such a matter is the standard recognition of the Internet-related industry. The above description is suitable if all browsers are implemented based on the protocol of the HTTP exactly. However, actual conditions are slightly different.

In the range of the inventor's experiments, it is possible to enter Kanji and so on in the URL input/display field (502). Although it may be contrary to the HTTP, it worked on browsers of two or more variations; which are made by different developer(s) and/or released as different version(s). However, ways of transmitting are different when they transmit the KURL including Kanji and so on toward the WWW servers.

Therefore, it can be processed as if KURLs work normally when both the WWW client 202 and the corresponding WWW server 210 are using the same Kanji code system or the following is done.

That is, (only one explanation is shown here though it seems that there are other methods,) setting up the amount of R (R = P x Q) files in the directory area if the following arrangements are given (reference: FIG. 8A):
assuming that the number of Kanji code systems which is possible to be used is P;
assuming that the number of variations (which come from the result of the encoding processing based on the HTTP) of character string is Q. If P = 3 and Q = 2 then six (6) files should be prepared for one (1) URL.

However, there is a fault in the above method. According to the kind of the OS (operating system) of a computer on which WWW server runs, it may be impossible to setup the corresponding file if said character strings contain particular character(s) of particular Kanji code system(s). The reason is:
In most cases, one letter of full-size characters such as Kanji is corresponding to two bytes (16-bit), According to the above method, it seems to be able to setup such file names which use Kanji characters, but, in fact, it was performed pseudo full-size character by only the way of using two single-byte characters (such as the ASCII code) without the other considerations. So, in such Kanji-processing method, full-size characters which contains unsuitable 1-byte character such as slash symbol could not be handled exactly.

Even if such situation is acceptable because of its low frequency, it is very troublesome work to prepare six (6) files toward one URL in its aspect of setup and management. And, when it becomes Q=5 by reason of increase of browsers which apply different processing method toward the KURL, even if it stays P=3, it is required to prepare fifteen (15) files toward one URL. Because of the possibility of the future increase of P and Q, such ad hoc measures described above seems to be a very troublesome from a point of view of server system management. More over, it holds irregularity described above.

TrURL has other restriction on its expression besides a issue of full-size characters such as Kanji.
First, acceptable character code set in TrURL is, even in the maximum case, the ASCII code which is one of 7-bit character code sets.
Besides the full-size characters described above, it is impossible to use multi-byte code systems using a range of two (2) or more bytes such as Japanese, Korean and Chinese. In addition, it is impossible to use the 8-bit (1-byte) code systems such as "ISO 8859-1" which is being used in and around Europe.

The TrURL has more restrictions.
Some characters (codes) in ASCII character code set are impossible to use freely from the point of view of users. To give an actual example, there are:
(1) characters defined as "non-graphic character" 1102,
(2) characters defined as "Unsafe" 1104, and
(3) characters defined as "Reserved" 1106.
   For more exact information, see the related URLs. It explains by using examples in the following.

The meaning of "non-graphic character" used at (1) above is special characters which are not printable. In this context, "graphic" means printable characters such as "a" or "="; it does not mean graphs or figures well used in mathematics such as circles or triangles. Note that meanings of these are different.
As an example of non-graphic characters, there are control characters, or functional characters, such as a bell-character which causes a bell sound. The bell character is assigned a code "0x07" which is expressed in manner of C language. Although these are "characters" which have special function, so they are different from a character "a" that they can not be expressed by printing. Therefore, it can not be "expressed" as a character string of a "URL" directly. As a countermeasure for this, RFCs provides means of fixed rules to encode it for expression. For example, the "bell sound" should be expressed "%07" by the rule.

The word "Unsafe" used in (2) above means that the character is not steady that you can use the character in a situation which you are not certain. In other words, its behavior may change according to a configuration of WWW servers (or browsers). So it should not be used or should be paid attention.
A "~" (tilde) is one example. When an expression "~tom" is given for a WWW server, it may mean a directory which is owned by "tom" who is a user of the WWW server; as for another WWW server, it may mean just a four-byte-long character string.

The meaning of "Reserved" used at (3) above is that they are reserved based on rules for the special purpose.
A "/" (slash) is one of examples. The "/" is used for a separator between URL host part and URL path part. The "/" is used for expression of structure (of directory and so on), too.
An expression "dir1/dir2/file" at a URL path part indicates a file "file" which is subordinate to a structure (or directory) "dir2" which is subordinate to a directory "dir1". Similarly, an expression "3/4" indicates a file "4" which is subordinate to a directory "3".

TrURL has other restriction on its expression described above. Therefore, a potential of TrURL as one of the tools for expression should be evaluated as a low class. For example, TrURL does not allow an English sentence or Japanese sentence to be expressed in a commonly used way.

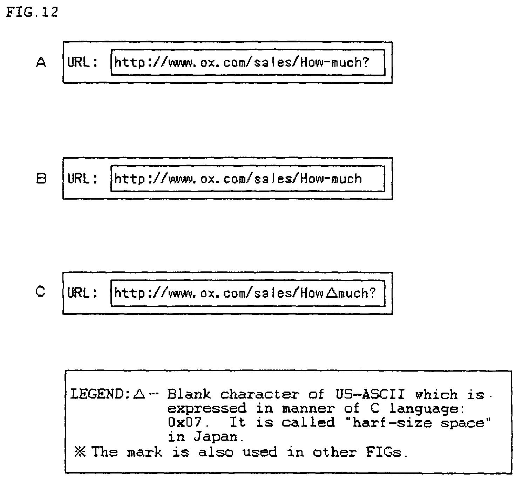

A URL like an English interrogative sentence is shown in FIG. 12A. According to the protocol of RFCs, it has the same meaning and causes the same result of a URL shown in FIG. 12B. In short, it is equivalent to FIG. 12A and FIG. 12B from URL's point of view. A "?" (question mark) in FIG. 12A does not have value as an English question mark. In short, a "?" in FIG. 12A does not have value as the character or the punctuation.

And, it is impossible or not suitable to include a usual English expression as "How much?" at a URL path part shown in FIG. 12C. The reason is that both characters are "Unsafe": one is the blank character (in hex-decimal expression: 0x20) between "How" and "much"; another is the "?" at the end of the sentence. This is very uncomfortable. Especially, when indication of URLs is considered the advertising means, lowness of freedom of expression ability becomes a barrier.

That is fine if a "Flexible URL" is given because freedom of expression ability will increase, wherein the Flexible URL (FxURL) means that:
the FxURL decreases restrictions of using of "non-graphic" characters 1102, "Unsafe" characters 1104 and "Reserved" characters 1106; or
the FxURL decreases restrictions of using of character code sets of 8- or 16-bit (or more) which includes special characters in Europe and full-size characters such as Kanji etc. FxURL is the general idea which contains the previous item, KURL.

Therefore, a purpose of this invention is to provide a function expanding device which is adaptable for conventional WWW servers, a function expanding method and a recorded medium which is recorded a function expanding program which comprises said function; they give the possibility of various character string processing by flexible interpretation for a URL path part which is transmitted from a WWW client to a WWW server.

### DETAILED DESCRIPTION OF THE INVENTION

A function expanding device according to Claim 1 makes a processing relating to URLs branch off from a conventional WWW server into a character string processing means which is a processing means not of the conventional WWW server by using an error inducing means for intentionally causing an error. (The character string processing means is a new mean provided by this invention.) When the processing, information stored as result of the information processing by the conventional WWW server in memory means is treated.

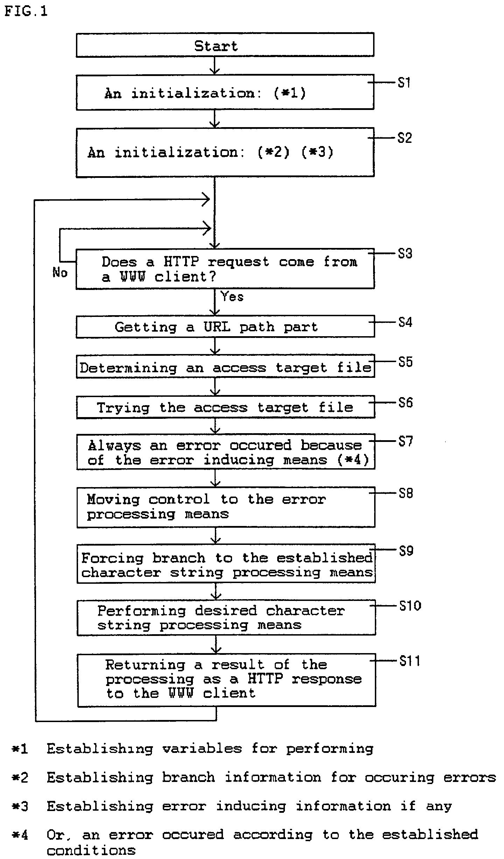

By this, it will become possible of flexible interpretation for URL path part. It was difficult for conventional WWW server to perform the thing. A flow of the processing is shown in FIG. 1: WWW server comprising the function expanding mean which is done as one of embodiment applied the invention.

So-there is no reason of restriction for matters of information processing at the character string processing means that it is possible to various information processing which use a character string part corresponding to a URL path part in a URL (reference: FIG. 4A). So, increase freedom of expression ability of URLs and increase value as notification means. Therefore, utility in industry improves drastically when a conventional WWW server comprising the function expand device according to Claim 1. (Hereinafter, such WWW server referred to as "FxURL complying WWW server".)

A function expanding device according to Claim 2 has a condition modifying means which is for modifying conditions to induce an error, or not, such as a thing which decide to induce an error against the arrival of what kind of URL path part or a thing which decide what kind of time zone to induce an error in.

Therefore, it is possible to set up or modify the conditions according to situations such as switching a conventional WWW server processing means and a character string processing means which are newly provided and using it corresponding to the purpose or processing URLs always by the conventional WWW server processing means as long as each URL contains a specified URL host part. By providing a lot of character string processing means having different functions, more various information processing can be performed by switching or mixing them when they are used.

When preparing a lot of character string processing means which have different functions, it is proper way of unification for making common parts of the structure of the character string processing means it self simple. If it can be done so, it will become easy to expand or maintain for the character string processing means in the future.

A function expanding device according to Claim 3 comprises all components of the function expanding device (except for the condition modifying means according to Claim 2) without any change toward fixed portion(s) of a conventional WWW server processing means; wherein the "fixed portion" means
(1) a portion which is difficult to modify, or
(2) a portion which is used without modifying in ordinary case if it began to be used once. In case of a set of programs which are consisted of a WWW server, a program itself which performs the WWW service fits the above. (It is a binary file named "httpd" as for one WWW server program package. This is applied not only software binary programs but also including hardware logic having equal functions.)
   On the other hand, non- "fixed portion" means is, for example, such as an initializing information holding section 614 which is referred by the initializing section of the WWW server or file (s) in a file holding section 620 which are transmitted as a HTTP response (reference: FIG. 3) by the WWW server. (About the initializing information holding section 614, it is a text file named "httpd.conf" as for one WWW server program package. This is applied not only software text file but also including switch kind which can switch on and off and volume knob-kind which can control applying degrees easily.)

In other word, the function expanding device according to Claim 3 can be apply easily or with low cost because it is never necessary to modify the central portion of conventional WWW servers. Therefore, it can be also applied for commercial WWW servers it is difficult for getting the source codes for it Even if it is not difficult for getting the source codes, because of: it is not needed to modify (the source code) and re-compile, it can be applied fast. And, even if "httpd" equivalent are coded by interpreter-type language which is not need to compile of source codes (this invention) give a merit that avoid involvement in degrading by modification of the source codes.

A function expanding device according to Claim 4 is characterized that a URL which becomes a target for processing is corresponding to a character string entered into a URL input/display field 502 at WWW clients (they are browsers in most case). This is the primary characteristic. Note that such character string is called "client-side inputted character string" in this invention.

The reason why the expression "client-side inputted character string" is used not a expression "client inputted character string" is that a WWW relay means 206 may stand between a WWW server 210 and a WWW client 220.

In case of the WWW relay means 206 may stand, an entity which make an direct communication with a WWW server 210 by HTTP is the WWW relay means 206, however, the WWW relay means 206 perform the communication with the WWW server 210 on demand from the WWW client 202.

In both cased of that the URL which is the target of processing by the WWW server 210 was transmitted whether from the WWW *client* 202 directly or via the WWW relay means 206, such URL is regarded as the data which come from the WWW client 202. So, the above expression" client-SIDE inputted character string" is used.

Secondary characteristic of the function expanding device according to Claim 4 is to reproduce the character string which is the completely same as URL input/display field 502 of WWW clients 202 (said character string which is entered at the WWW client-side hereinafter referred to as "CHARACTER STRING 1") at WWW server 210 (said character string which is reproduced at the WWW server-side hereinafter referred to as "CHARACTER STRING 2") . Said function expanding device according to Claim 4 is comprising a gaining means can gain the same character string as the CHARACTER STRING 1 in appearance (i.e., the same when they are printed) at WWW servers even if what kind of expression forms are used for transmitting in network(s) 208.

Therefore, even if a character string containing "Unsafe" characters which is entered into the URL input/display field 502 of WWW clients (browsers) 202, i.e., even if said FxURL is entered into the URL input/display field 502, it is possible that said character string processing means can gain the CHARACTER STRING 1, the same character string in appearance which is entered into the URL input/display field 502, as the CHARACTER STRING 2 whatever the following condition is given:
(1) a difference of applied Kanji code systems between both WWW processing means (202 and 210),
(2) a difference of measures for encoding between two (2) or more WWW clients (202) or
(3) a difference of performing encoding or not in WWW clients (202).

However, when character strings including a raw (and non-encoded) "#" symbol itself such as
http://www.ox.com/index.html#sales
is entered into the URL input/display field 502, a portion after the "#" of the character string ("#sales") may not be transmitted toward the WWW server-side (WWW servers or WWW relay means) in normal cases. So, WWW servers will not able to reproduce such the portion after the "#" of the character string, namely, the CHARACTER STRING 2 is not the same as the CHARACTER STRING 1. If the portion after the "#" of the character string is transmitted toward the WWW server-side, it is possible that the CHARACTER STRING 2 will become the same as the CHARACTER STRING 1.

Because said FxURL (or a KURL, a subset of the FxURL) can be entered into the URL input/display field 502, it becomes possible to use KURL including Kanji etc. such as 1001, 1007 or 1009 shown in FIG. 10. Therefore, the value of URLs as expressing means is significantly heightened. In addition, with reference to FIG. 12C, it will be possible to put ordinary English expression(s) which includes characters like said "Reserved" characters 1106 at a URL path part of FxURLs. Using both at the same time will be also possible. Namely, it will be also possible to put character strings including both characters like said "Reserved" characters 1106 and Kanji etc.

A material (a REFERENCE 2, source is described in later), an article of a newspaper introduced one person's speaking that "It is a troublesome job for Japanese to enter URL-address in English." In addition, in the same article, an understanding is shown that "There is not a minor opinion that Japanese-converting software for URLs are desired at the entrance of the Internet." It may be proper that the above understanding is a regular understanding in the Internet industry or personal computer users. As described above, the inventor understand that said function expanding device according to Claim 4 will come up to their expectations.

Furthermore, when making said function expanding device according to Claim 4, it is preferred to unify Kanji code systems used in the function expanding device at the early stage of the processing. It becomes a merit when performing more complex processing for making progress of processing without concerning differences between Kanji code systems at the later stage of this function expanding device.

As a function expanding device according to Claim 5, a URL is regarded as the object of processing originated in character strings given except from the URL input/display field 502 of browsers. That is the first characteristic. The second characteristic is similar to the function expanding device according to Claim 4. Detailed explanation about the first characteristic is described in the following.

In a embodiment of usual WWW services, WWW clients 202 are personal computers comprising program(s) called browser in a general way. FIG. 5 is a illustration of an outline of a display interface of such browsers. A URL, which may be TrURL or FxURL, regarded as the object of processing at WWW servers may be given from the URL input/display field 502 of browsers. Namely, entering or choosing of the URL regarded as the object of processing is performed manually however in case of keyboarding by men, choosing from given choices by using (computer-)mouse, or other ways. Someone might do it (entering or choosing) by using preferred GUI (graphical user interface) provided by commercial browsers. On the other hand, another one might do it by using browser(s) having CUI (character user interface), not GUI. Putting appearances aside, they may use program(s) which is characterized as WWW clients (i.e., "browsers") respectively.

The function expanding device according to Claim 5 is not so. The function expanding device presumes that programs such as (1) a program which does not have good (or restricted) GUIs/CUIs as well as browsers' even though URLs are given manually, or (2) a program which performs automatic data transmitting toward WWW servers where the data is desired URLs generated in automatic operation are used.

As an example of the former, there is a program called "telnet". As an example of the later, such as, there is a homemade program having capability for processing HTTP. The lattere program is able to progress of processing without asking for people's help. So, such program is suitable for processing mass data automatically in a lump or by distributed situation. In addition, such program has no need for having even a primitive user interfaces, let alone a GUI so that its size of source codes (or executive program) becomes smaller. Therefore, better processing speed may be obtained even on non-high-performance personal computers. However, when setting up running conditions for automatic processing, it may be necessary to get human assistance in some cases.

The function expanding device according to Claim 4 indicates a WWW server which is processing URLs generated by using the programs which have such characteristic show in said (1) and said (2) above. So, because of human assistance is not always needed for such URLs, it (the function expanding device according to Claim 4) is suitable for processing mass data automatically in a lump or by distributed situation.

In addition, it is not necessary that a character string which becomes a URL should be given from the URL input/display field 502 of a browser. So, URLs which can not be given or is difficult for entering from the URL input/display field 502 are able to become targets of processing at WWW servers, too Thus, for example, more expressive character strings contain Kanji and symbols which are difficult to enter -- that are the FxURLs - - will be able to be usable. It is convenience.

A function expanding device according to Claim 6 is characterized as follows:
(1) a URL path part contains Kanji, Hiragana or Katakana; and
(2) it does not contain a character string which is defined as a indicator for transmitting parameter(s) to CGI programs etc. by RFCs (that is a "?" in the present version's RFCs) as far as the character string is used in the meaning as its definition. In other words, that is: In case of that a character string "?" is used for indicator for transmitting parameter(s) for CGI program at a URL including Kanji, i.e., in case of that a URL path part is a character string which conforms to normal expression form of RFCs, it is not scope of the invention that such URL becomes available for processing. The following is an example. According to a URL having a URL path part is a character string of "? 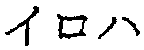 " or " index. cgi? 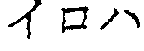 ", it is not scope of the invention at this Claim that such URL becomes available for processing.

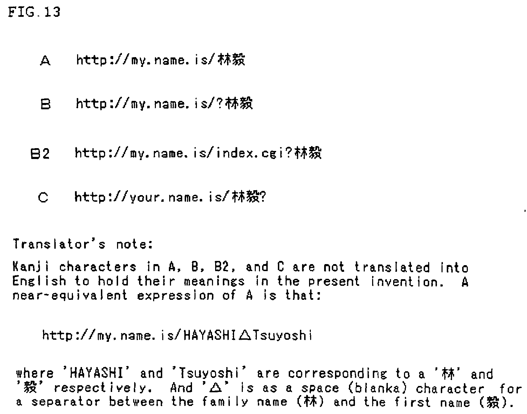

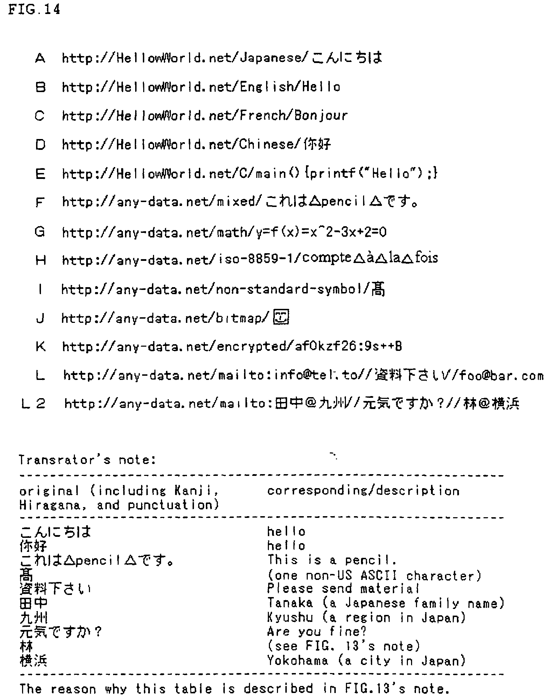

Detailed explanation about it is described in the following.
It is scope of the invention that a URL shown in FIG. 13A or 13C becomes available for processing. But, it is not scope of the invention that a URL shown in FIG. 13B becomes available for processing.
Because, as for the inventor's experiment that current major browses in the market were used, the browsers supposed to encode suitably for conventional WWW servers to perform a URL path part of the URL shown in FIG. 13B as parameter(s) for CGI processing means. Conventional WWW servers usually provides such CGI processing means. (However, a implementation which enables processing URLs including Kanji shown in said FIG. 13B "suitably" but seemingly may be a violation against protocols defined RFCs. And/or, said successful acts are only within the inventor's experiment.
Thus, there are no novelties that the URL shown in FIG. 13B becomes available for processing. In addition, as concerns process the URL shown in FIG. 13B, conventional WWW servers perform it without using an error inducing means for intentionally causing an error described in Claim 1, that is, such URLs are made information processing as one of formal processing. Also from this point of view, it is not scope of the invention that a URL shown in FIG. 13B becomes available for processing.

If URLs are considered as a kind of information expressing means such as notification media like mass-media advertisement, FIG. 13B is poor against FIG. 13A because of the following reason (s) : If a person who reads URLs have basic English literacy (in addition to basic Japanese/Kanji literacy), the person may be able to understand (or figure out) FIG. 13A as a meaning of "My name is 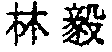 ", i.e., "My name is HAYASHI Tsuyoshi" by considering its URL host part and its URL path part. (Translator's note: An above sentence is written regarded as the person have basic Japanese literacy because basic application filed in Japan is written regarded as Japanese.) The person rarely if ever might be able to understand (or figure out) FIG. 13B as so, a symbol "?" at the beginning of the URL path part is unnecessary. In general text expression, such "?" is not used. And, the symbol "?" may not be included in personal names, corporate bodies, etc.

An example shown in FIG. 13C a person may be able to figure out (or understand) the example as a meaning of "Your name is 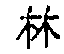 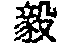 ?", i.e., "Your name is HAYASHI Tsuyoshi?" or "Is your name HAYASHI Tsuyoshi?". Not same as FIG. 13B, the symbol "?" (which is at the end of the URL path part) is not unnecessary because it is understandable that it has a role as a question mark of the sentence.

Note that as concerns an expression shown in FIG. 13B, file name such as CGI program which should be stand before a "?" is omitted. If not omitted, for example, it is snown in FIG. 13B2. It seems that the URL shown in FIG. 13B2 may be decreased its value as notification means.

A function expanding device according to Claim 7 is characterized that a URL path part contains an expression (or a word) in languages used in nation(s) or region(s) such as Japanese, English or French. This automatically means that phrases or sentences are also included (reference: FIG. 14A, 14B, 14C, 14D and 14F). The artificial languages like Esperanto are not excluded.

If it is possible to enter or designate the following character string(s) :
(1) non-ASCII character codes in ISO 8859-1 character code set,
(2) characters which are regarded as the so-called Gaiji (where Gaiji is that corresponding code is assigned by each users respectively because standard code is not assigned for the character at conventional Kanji code system(s)), or
(3) character strings where both of them are used within from a URL input/display field 502 or by the other means as a URL, various expression becomes possible more and more by using these. FIG. 14H is an example for (1) above, which contains phrase(s) in French. FIG. 14I is an example for (2) above, which contains an (Kanji character of) conventional typeface of " 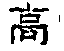 ". Although "ISO 8859-1" is used in this explanation, "ISO 8859-2", "ISO 10646", and other character code set are able to be considered similarly.

In some cases, the function expanding device according to Claim 7 is also characterized that a URL path part may include expression mode such as a numerical formula that is used in a particular academic field (for example mathematics), commands of computer languages, etc. FIG. 14G is an example of URL including a numerical formula (quadratic of x). FIG. 14E is an example of URL including C language which is one of computer languages.

By this, it will become possible to use URLs equipped with various expressive power such as sentences by various languages or numerical formulas. Namely, application of expressive power-rich URL becomes possible. The utility value as the information expression means of URLs improves more and more. It is suitable in the application to business activity etc. It will be as well possible to use expressions such that it stimulates the customers' interest of consumers and feel excited to URLs. The inventor think so.

Taking Claim 7 too much to heart, it can be found that it is possible to use any optional expression means. According to the language system, Braille and finger language may be good. Even if it is gesture or body language, it also may be good.
However, it seems to be difficult to express action such as finger language or gesture in a URL input/display field 502 because, for example, contents to be expressed may be changed with the passing of time. It might be possible if using so-called "animation GIF", it is something like the slide that continuously indicated it and used image data. But, as for Braille, it may be possible for entering and displaying by devising ways of implementation of the URL input/display field 502.
Deepening such thought, it is guessed that it is possible to handle any image data at the URL input/display field 502. Because of above reason(s) description is focused on static image data in the following.

To materialize this, it is necessary to switch the meaning of a URL input/display field 502 provided by conventional browser from that it is <an area which can be used for displaying, entering and/or editing prescribed character strings> to that it is <an area which can be used for displaying, entering and/or editing any image data>.
For instance, it is necessary to re-implement for URL input/display field(s) ; from conventional implementation regarding it as <an one-line text editor> into new specification regarding it as <an image editor which enables a range of the oblong area as the editing range>. Of course, it should be done that the area can be used for displaying, entering and/or editing character strings as well as usual image editors.

By the way, as concerns this "new" "URL input/display field" (hereinafter referred to as an "image data-acceptable URL input/display field"), it is possible to the same looks as conventional URL input/display fields. So, it is possible to regard the URL input/display field 502 shown in FIG. 5 as the image data-acceptable URL input/display field.

When thought is developed up to here, as concerns URLs which contain image data etc. at the URL path part (hereinafter such URL is referred to as "visual URL" or "VURL" in short), such VURLs seems to be exceeded its scope of URLs defined by RFCs. But, for example, it will become possible to express Braille and image data at a URL path name part if both sides will establish the following agreement that Braille and image data should be encoded by BASE 64 format of a standard called MIME (multipurpose internet mail extensions) defined by RFCs.

In this case, the following embodiment may be possible to be supposed:
(1) as concerns both an expressed material at a URL input/display field in a WWW client ("EXPRESSION 1") and an expressed material which is result of decoding of the EXPRESSION 1 in a WWW server received the EXPRESSION 1 ("EXPRESSION 2"), these information should be expressed in the form of Braille or image data;
(2) in network(s) standing between the WWW client and the WWW server, the expressed material should be in BASE64 format ("EXPRESSION 3").
   An example of VURL is shown in FIG. 14J. An image data, a small icon imitates face of a person, is placed at the URL path part.

Such function expanding can be solved easily at WWW server-side by applying function expanding devices including "error inducing means for intentionally causing an error when the WWW server process URL", "character string processing means processes using at least a URL path part", etc. according to Claim 1 of this invention.

By the way, if VURL image data part is encoded into BASE64, the image data should be expressed by the combination of total of sixty file (65) kinds of characters consist of "a" to "z", "A" to "Z", "O", "1" to "9", "+", "/" and "=". All 65 characters including "/" can be used for describing without any restriction if FxURL will be applied.

VURL is possible to use any image data including Braille (in fact, it is a kind of image data like Braille) and pictorial symbols into URLs as information expression means. Therefore, for example, it will become an important materials for persons such as (1) people who cannot understand normal expression of Japanese, English, etc., (2) people who be able to read Braille or pictorial symbols fast or familiar with it rather than normal text, or (3) people who hope simple communication of the will by using pictorial symbols. VURL, including Braille, may become help for the handicapped who use the Internet well. However, other particular devices are needed for entering or reading of actual Braille having irregularities, not Braille printed non-irregularities.

By the way, it may be easy to read described content itself of VURLs. But, not in case of character springs, in case of that VURLs are described on printable media such as paper, it may be difficult to enter the same materials that is read into a URL input/display field in many cases. In such the case, for example, it will be in the case that above issue can be solved by the following means: (1) putting two-dimensional code ("2-D code") corresponding to the VURL to the nearly place where the VURL is printed, then, reading the 2-D code by a 2-D code reader automatically; or (2) in case of that a VURL is printed on a cards, making magnetic stripe(s) on the card, and, recording the encoded VURL into it, then, reading it by using magnetic card reader automatically.

In addition, treating a character string entered into a URL input/display field 502 as a graphical information, it is possible to implement like changing actual meaning of the URL based on difference of applied character fonts such as Ming type and Gothic type. In this case, the following ways may be possible to be supposed: (1) transmitting information as a conventional character string (text) with information about the kind of fonts toward a WWW server, or, (2) regarding a entered URL as a image data then transmitting by explained method toward a WWW server.

The function expanding device according to Claim 7 is also possible that a URL path part includes encrypted data. When a encrypted data is put as a character string, the character string may be described with graphic characters in the ASCII character code set normally. There is no "Unsafe" or "Reserved" characters for FxURL, not like TrURL. Thus, a encrypted data can be put at a URL path part without particular encode processing. An example is shown in FIG. 14K. An character string shown after "encrypted/" portion is a character string of a data which is encrypted by cryptography called "DES" (in the computer industry). This is an example. Cipher(s) which is applied is optional.

A function expanding device according to Claim 8 is characterized that a URL path part contains a character string indicating a search. Such a "character string indicating a search" belongs roughly to one of two categories. One is using symbol(s), another is using natural language(s).

As for the former, search indication using symbols, the expression method, called a "regular expression" or a "wild card" in computer industry, is used. Using this, it is possible to use URLs such as shown in FIG. 15A, 15B, 15C, 15D and 15E.

FIG. 15B shows an example using wild card, WWW servers may search a directory area (reference: FIGS 8A) of a file holding section 620. Next, they may find out files under the condition that the file name is starting "a" and ending "z.html" (ex.: "abcdz.html", "a 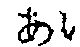 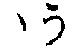 z.html" and "a+-=z.html").
FIG. 15A shows an example using wild card, too. It may be to find out files under the condition that the file name is starting "a", ending "z.html", and file name length is eight (ex.: "abz.html", "a-z.html" and "a.z.html"). If two (2) or more files are fulfilled, the following rules need to be worked and need to be defined separately:
(1) Regards the first file as the result of search;
(2) Perform all result of search in order of found.
   And, about whether or not should make files having file name including full-size character(s) the object of search a different rule will become necessary in the above examples.

FIG. 15C shows an example using regular expression. It may be possible to interpret that the URL indicates finding files out under the condition that file name is consisted of only digits.

FIG. 15D is an example which may be possible to interpret that the URL indicates finding persons out from a data base that is in external of WWW server processing means under the condition that persons' name is starting " 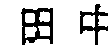 ". (In this example, identification of the data base is "names.jp"; to be construed as a Japanese name data base.)

Similarly, FIG. 15E is an example which may be possible to interpret that the URL indicates finding persons out from the data base called "names.jp" under the condition that persons' name is ending " 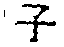 ".

On the occasion of actual operatiqn, it needs to agree to a regular rule such that about whether what kind of expression (character string) has what kind of meaning and whether the rule is defined in advance or dynamically with a WWW client-side and a WWW server-side.

As for the second, search indication using natural languages is described.

FIG. 15E2 is an equivalent of FIG. 15E. Although wild card is used in FIG. 15E, FIG. 15E2 is expressing by using a natural language. Describing it with except for Japanese may be possible. And, containing query sentence like FIG. 15F (or FIG. 15F2 where data base identification is omitted) may be possible. If such a FxURL is used at the WWW client 202 side and the FxURL is processed by a WWW server 210 side, one of the following may be needed:
(1) a providing language processing means which gets meaning of URL path part by processing language separately; or
(2) a processing such that (a) deciding the pattern of the construction which can be interpreted in advance at the WWW server 210 side, (b) building up a sentence in accordance with the pattern at the WWW client 202 side, and (c) including the sentence in the URL pass part.
   From the meaning that a form is decided properly, the latter method looks like the point of programming of the computer language.

As it described above, it is convenient because it can be possible such as (1) including a character string which makes a searching formula which cat get multiple files on one request, or (2) including a character string which makes a question sentence in the natural language. By applying this art, it will be possible to provide a search service of the new type in the Internet.

A function expanding device according to Claim 9 is characterized that the function expanding device provides at least one of two contrastive means shown bellow.

The first means is a "special character string normalize interpretation means". By this, it is possible to use "Unsafe" characters 1104 which are given special Meaning by the protocol of HTTP such as "?" or "/" or "Reserved" characters 1106 under the original meaning of such characters.

So, it will be possible to express a fraction which is "3/4" (reference: FIG. 16A).
In usual, FIG. 16A is a URL which it should be interpreted with that the URL indicates a file named "4=0.75" under a directory named "answer=3". It is because "/" is thought to show the boundary of the directory structure by rule(s) of URL which establishing the form of URLs.
It becomes such interpretation with TrURL. But, It doesn't necessarily need to interpret it like this with FxURL. Like this, the function expanding device according to Claim 9 makes it possible that "/" is used for the meaning except for the sign which shows the boundary of the directory structure. It is the same except for "/" as well.

Like this, by using the "special character string normalize interpretation means", the advantage that it becomes possible that the sentence of the more natural expression is contained in the URL path part can be obtained.

The second means is a "normal character string specialize interpretation means". It is contrary to the "special character string normalize interpretation means" described above, it may be possible that some character strings are interpreted as a thing which shows the boundary of the directory structure. For example, there is no thing which indicates the boundary of the directory structure in a KURL shown in FIG. 16B. By interpreting " 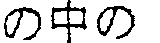 " or " 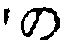 " with being equivalent to "/", the KURL shown in FIG. 16B can be substituted for a KURL shown in FIG. 16B2. Pay attention to underline parts of both KURLs, please.

By this, whereabouts of a file should be accessed in the file holding section 620 is decided. Then, it comes to be made the file of the purpose.

The KURL of FIG. 16B2 is the sentence of Japanese which Kanji and so on are used for. As for the transformation treatment from FIG. 16B2 to FIG. 16B3 in this example, it is not necessary to understand linguistic meanings of a content of the URL path part on the occasion of a translation. It is sufficient by a mere substitution treatment.

With TrURL, there is no usage that " 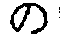 " is used in such meaning and because Kanji as well can't be used, It could not but be expressed as FIG. 16B3. If the way of expression (i.e., KURLs or FxURLs which KURLs are included) shown in FIG. 16B is popularized, it has possibility that it can lower "barrier of entering" for using computers several steps. So, increase in the user of the WWW service and so on can be expected. Increase in the whole user of the service of the Internet can be expected together, too.

And, as for "some character strings" which it is made to interpret as a thing which shows the boundary of the directory structure, even a Japanese phrase expressed in Roman alphabet is good, even a English phrase expressed in Roman alphabet is also good, and even other symbols and the like are also good, FIG. 16B4 shows an English phrase expressed in Roman alphabet. This case, first step is a substituting "ΔofΔ" for "/", wherein "Δ" is a blank character of ASCII character code set, which is expressed "0x20" in manner of C language. It is called "half-size space" in Japan. The mark is also used in FIGs in the same meaning. Next is replacing the row of the left-right word. As a result of these, FIG. 16B3 is obtained. In addition, it can be obtained FIG. 16B2 by a English-Japanese translation.

Although an item which is defined by RFCs as a "thing which indicates a boundary of the directory structure" and character strings corresponding it are used in the above explanation, this also applies to other items.

Like this, an advantage that it becomes possible that the sentence of the more natural expression is contained in URL path part can be obtained by the "normal character string specialize interpretation means".

As described above, the application range of the invention which Claim 1 is the reached point is very wide. It is because that there is no reason to restrict contents of the information processing in "the character string processing means" specially contributes greatly.

It is good if the device made the target fills two conditions bellow to use the function expanding device by the invention:
(1) a mechanism to call processing means for exception matter occurrence and
(2) an optional thing can be established as for the processing means.
   For example, though "CPUs" are not "WWW servers", a lot of CPUs fill these conditions.

By considering this point, a doubt takes place about limiting the device which Claim 1 makes the target of the function expanding only to WWW servers. So, "what will be happened if the limitation is removed", the inventor asked himself.

If data such as the file of the computer are caught as the "resources", URL can be said as the character string for identifying resources in the Internet. In fact, "Uniform Resource Locators" which is the formal name of "URL" shows it. Then, if the character string that the whereabouts of the resources is pointed out is read with the "character string for addressing", it may be possible to say that it is (one of) the "character string for addressing" about the following thing as well:
(1) "electronic mail addresses", which are character strings that they are being used frequently,
(2) "domain names", which are common elements to URLs and electronic mail addresses.

When thought is advanced here, it may be able to guess the invention can be applied the whole of servers which are processing the character string for addressing such as:
(1) electronic mail server, which is a means for electronic mail distribution etc. or
(2) DNS (Domain name system) server, which is a means for getting IP address(es) from domain name(s).
   It may be able to apply to FTP (file transfer protocol) servers, too. That is, if an electronic mail server (a program named "sendmail" is very famous) is taken as an example, it is possible to lay down a claim shown bellow:

"A function expanding device consists of
an error inducing means for intentionally causing an error when a conventional electronic mail server processes an electronic mail address,
a character string processing means which treats at least a user's ID part of the electronic mail address which said conventional electronic mail server stores in a memory means, and
a branch processing means which makes this process branch off from said conventional electronic mail server into said character string processing means when the error is caused by said error inducing means."

If this thought is further pushed, it can be guessed that the invention can be applied to the territory except for the Internet as well. For example, it will be able to be applied to the circuit exchange system based on the telephone number in the telephone network report service as well.

While thinking like this, the inventor thought that there was a limit in the following way like giving all the use which can be applied independently and to describe as Claims. So, the true nature of this invention was extracted. And, that are written as new claims, Claim 10 and Claim 11.

An invention according to Claim 12 is written the invention according to Claim 1 as a method type. That is, it is the invention that: on the occasion of URL processing, WWW servers expand its function by the next three (3) means:

First is providing error inducing error causing set-up step for intentionally causing an error.
Second is providing character string processing step which performs using URL path part which in the data held in memory part(s) in WWW server.
Third is providing branch processing step which makes the process branch off from the internal routine of the WWW server to newly provided character string processing routine when error is occurred in result of said error causing set-up step.

An invention according to Claim 13 was written the invention according to Claim 1 as a recording medium. In other words, it is a recording medium recorded with the "function expanding program" which is provided computer program(s) in WWW servers in the scope of the Invention according to Claim 12.

Easily imagined, not only the function expanding devices according to Claim 1, there are corresponding an invention as a method and an invention as a medium respectively.

When the inventor pushed thought further, an error causing means acquired knowledge with which doesn't need that it will be necessarily contained as a component of the function expansion device, and it could be folded, and described this invention to it as Claim 14, And, the invention when a "conventional information processing means" according to Claim 14 is limited to WWW servers is described as Claim 15.

In this invention, the "character string" means a thing as character(s) continued one (1) or more. Wherein the "character" means any letter can be expressed on the computer.
In other words, it is a things that an character code is decided in one meaning at some character code set (code system).

The "character code set" means that a set of characters have one corresponding code respectively or a name for the set.

The "full-size character" means each character of characters defined as "JIS X 0208" including Kanji, Hiragana, Katakana, etc. It was defined by JIS (Japanese Industrial Standards) for use of expressing scripts written in Japanese etc. A character expressed within one (1) byte (7-bit or 8-bit) per character is so-called "half-size character". Correspondingly, it seems to be called "full-size character" because it is expressed by two (2) bytes (16-bit) per character. This words "Full-size character" also includes so-called "Supplementary Kanji" (JIS X 0212) expressed by two (2) or more bytes per character and other Kanji character etc. expressed by two (2) or more bytes per character used in China, South Korea and Taiwan.

Sometimes, corresponding codes for an same character are different even if all or most part of them are the same from a point of view of character "set" themselves. As for a full-size character defined at "JIS X 0208", three (3) kind of "JIS", "EUC" and "Shift JIS" (which are aliases or popular names) are used corresponding to the scene. In such case it is said like "there are three kind of Kanji codes (Kanji code systems)". There is a overlapping part in Kanji etc. area of the "Unicode" (ISO 10646) defined by the International Organization for Standardization.

The "character string processing" means information processing using character string(s) such as dividing a character string into more than one character strings, translating a character string which makes Japanese into English, substituting a character string based on some rules: for another character string, or counting the number of the characters of an character string. Relating to a URL, it is one of character string processing to divide a character string into a URL host part and a URL path part.

In this invention, the "recording medium recorded with a program(s)" is a general idea including
a flexible disk,
a CD-ROM,
an optical magnetic disk,
a hard disk,
a memory card,
a IC card,
a ROM,
a punch card,
a tape, etc.
In addition, the general idea including not only a recording medium recorded with a program(s) executable directly by computers but also a recording medium recorded with a program(s) which becomes executable when it is installed into other recording media (such as hard disks) and a recording medium recorded with a program(s) which is as encrypted or compressed.

The "CGI processing means" or the "CGI program" is an information processing means which is called from a WWW server processing means via a mechanism so-called CGI (common gateway interface). When it is especially called a "CGI program", the information processing means is implemented as program(s). It may be just called "CGI".

The "top page", normally, means the page indicated first in a homepage (reference: FIG. 9). Originally, "homepage" was being pointed an page of the entrance of a homepage at present, but such misuse spread out and took root. Homepages are related to multiple document files, image data and/or the CGI program(s). Each file has a unique address (URL). Generally, a thing of a URL of a "top page" is being pointed at in a case like an "address (or URL) of the homepage".

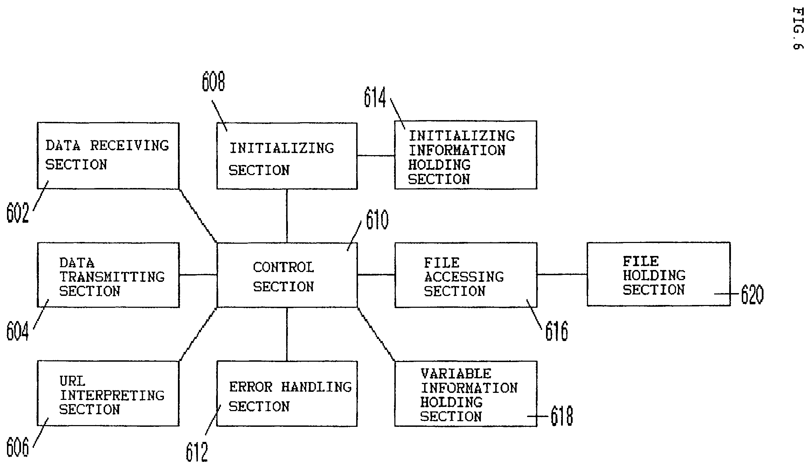

The "WWW server" means an program which provides server-side function of WWW services (reference: FIG. 3). It is a general idea which includes needed files etc. for performing the program (reference: FIG. 6). The general idea also includes a device which is a computer like a workstation or a personal computer etc. installed such programs (and said needed files etc.) (reference: FIG. 17). The general idea also includes a special device that the function of the WWW server is built in as software (s) or hardware(s). Especially it is called so while the above program or a device are moving. And, it is called "WWW server program" when it pays attention to the program which is running on the WWW server processing device. It includes the WWW server that FxURL's processing became possible by doing function expansion by this invention. Especially it is called "FxURL complying WWW server" when the inventor would like to show the WWW server which expanded this function.

The "WWW client" is a program of providing functions on a client-side of the WWW service. It is a general idea which includes needed files etc. for performing such program. The general idea also includes a device which is a computer like a workstation or a personal computer etc. installed such programs (and said needed files etc.). The general idea also includes a special device that the function of the WWW client is built in as software or hardware. Especially it is called so while the above program or the device is running. And, it is called "browser" when it pays attention to the WWW client's display interface (reference: FIG. 5).

The "network" is a general idea which includes the Internet which is a public network in a wide area, an intra-net which is a network in an organization, and a LAN (local area network) which is a smaller scale network. It is not obstructed including a network which is not comply with TCP/IP (communicaticn protocols for the Internet defined by RFCs) as for communication protocol(s).

The "directory" is a special information area which stores files' index information for a file system (which is meaning file management means or a media storing files) Such information area is implemented as a kind of file in some OSs.

The "file" is the general term for data files, program files and special files. Wherein the data file is a file stored data such as information of text (character strings, documents), image data, sound data, etc. The program file, also called a "program" or a "executable program", is a file which is can be run on a computer. An representative example of the special file is said directory. Other example of it, except for the directory, is that some OSs treat a display or a keyboard as a file. And, when a "file" is just said, a data file and a program file are pointed at in the narrow sense, only a data file is further pointed at in the narrow sense. As for a scene when a meaning of the word is not clear or a scene when the inventor would like to definite contents of the file, it is expressed "data file", "program file" or "directory" respectively.

In this invention, the "OS" is a general idea which includes a part called a "kernel" which is the nucleus of the OS. In addition, it also includes the following (several types of) files:
modules around the kernel which is called "library";
modules which provides interactive functions for users which is called "shell" etc.; and
tools which are accompanies with the kernel such as an editor, a character string processing program, etc.

As for the source of the "REFERENCE 1" in this invention is: "Nikkei Communications" (published by Nikkei Business Publications, Inc.), April 20, 1998 issue, the 111th page.

As for the source of the "REFERENCE 2" in this invention is: "Nikkei Sangyo Shinbun", dated April 16, 1998, the sixth page.

### BRIEF DESCRIPTION OF THE DRAWINGS

FIG. 1 is a figure which shows the flow of processing of an WWW server which comprising function expanding means as an embodiment of this invention etc.

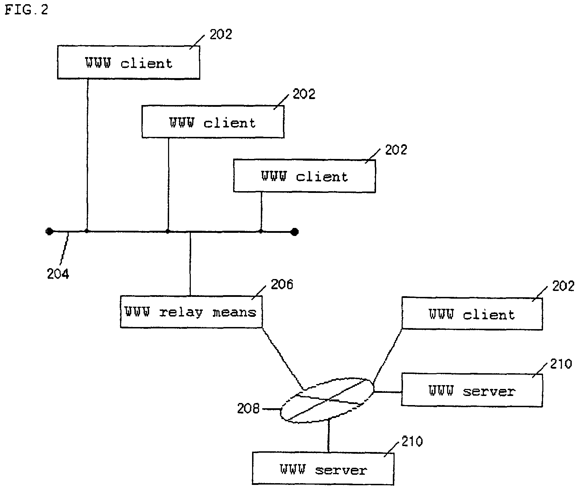

FIG. 2 is a figure which shows the general use form of WWW services.
FIG. 3 is a figure which simplified an exchange between an client and an server in an WWW service.
FIG. 4 is a figure which describes components of a URL.
FIG. 5 is a figure which simplified an screen interface of an browser.
FIG. 6 is a block diagram which shows components of an conventional WWW server and related data.

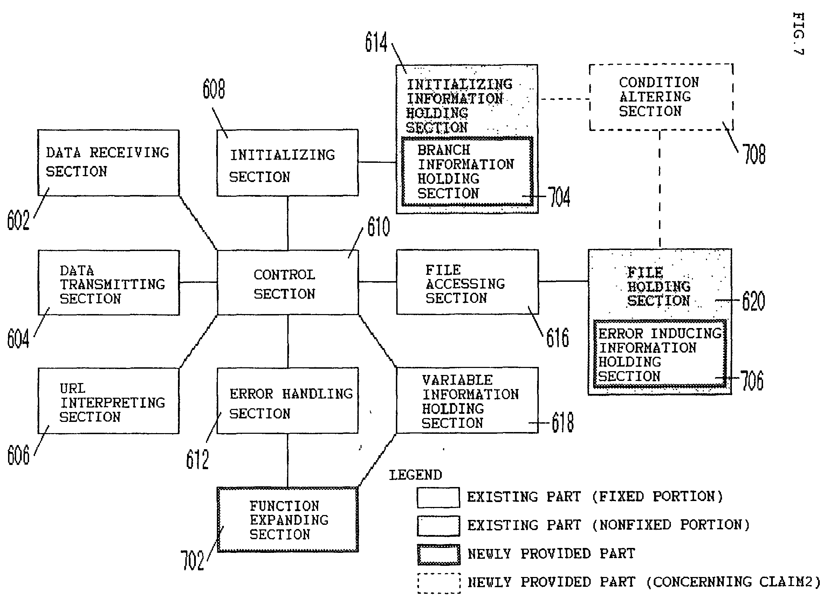

FIG. 7 is a block diagram which shows components of an WWW server which comprising function expanding means as an embodiment of this invention etc.
FIG. 8 is a figure which showed relation between an index area and a file area in an file system.
FIG. 9 is a figure which shows URL (where the URL is an standard TrURL) of a homepage of the Maru-batsu company and its contents.
FIG. 10 is a figure which shows URL (where the URL is a KURL which contains Kanji etc.) of a homepage of the Maru-batsu company and its contents.

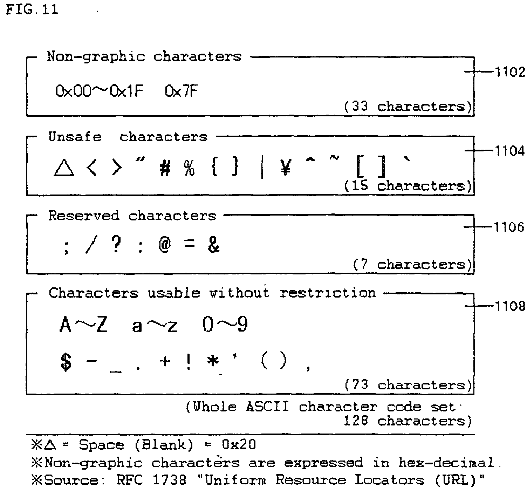

FIG. 11 is a figure which shows suitability of use about each ASCII character in URL expression.
FIG. 12 is a figure which shows examples of URLs which contains a sign "?" at the end of it.
FIG. 13 is a figure to show relations between existence of an sign "?" in URLs and expression ability of URLs.
FIG. 14 is a figure which shows examples of URLs which become possible by this invention. This figure attaches importance to abundance of character kinds.
FIG. 15 is a figure which shows examples of URLs which become possible by this invention. This figure attaches importance to abundance of searching functions.
FIG. 16 is a figure which shows examples of URLs which become possible by this invention. This figure attaches importance to a point that usual expressed sentences are possible.
FIG. 17 is a figure which shows components of a WWW server processing device which comprising function expanding means etc. as an embodiment of this invention.
FIG. 18 is a figure which shows function of URL dividing means which divides an given URL into four (4) parts such as URL pass part etc.
FIG. 19 is a figure which shows how an actual access applicable file is decided with effect of relations between contents of an initialization file of a WWW server and a URL path part obtained from an WWW client.
And, the explanation of brief description being used in FIG. 1 through FIG. 19 is written in the following.
(S1) An initialization step (general settings)
(S2) An initialization step (items which are characteristic of this invention)
(S3) A HTTP request receiving decision step
(S4) A URL path party getting step
(S5) An accessing target file decision step
(S6) An accessing target file decision step
(S7) An error occurred step
(S8) An error handling step
(S9) A branching step moving to an character string processing step
(S10) The character string processing step
(S11) A HTTP response transmitting step
(202) A WWW client
(204) A small size network (LAN, intra-net, etc.)
(206) A WWW relay means
(208) A wide area network (The Internet, etc.)
(210) A WWW server
(502) A browser's URL input/display field
(504) A browser's receiving data displaying field
(602) A data receiving section of an WWW server
(604) A data transmitting section of the WWW server
(606) A URL interpreting section of the WWW server
(608) An initializing section of the WWW server
(610) A control section of the WWW server
(612) An error handling section of the WWW server
(614) An initializing information holding section of the WWW server
(616) A file accessing section of the WWW server
(618) A variable information holding section of the WWW server
(620) A file holding section of the WWW server
(702) A function expanding section of a WWW server (which is newly provided part by this invention)
(704) A branch information holding section of the WWW server (which is newly provided part by this invention)
(706) A error inducing information holding section of the WWW server (which is newly provided part by this invention)
(708) A condition altering section of the WWW server (which is newly provided part by this invention)
(901) A URL input/display field of a Maru-batsu company's top page (where a shown URL is a conventional TrURL)
(902) The Maru-batsu company's top page (where the shown URL is a conventional TrURL
(904) A link part relating to a sales section at the Maru-batsu company's top page (where the shown URL is a conventional TrURL)
(906) A link part relating to an technical section at the Maru-batsu company's top page (where the shown URL is a conventional TrURL)
(907) A URL input/display field of a sales section's page of the Maru-batsu company (where a shown URL is a conventional TrURL)
(908) The sales section's page of the Maru-batsu company (where a shown URL is the conventional TrURL)
(909) A URL input/display field of a technical section's page of the Maru-batsu company (where a shown URL is a conventional TrURL)
(910) The technical section's page of the Maru-batsu company (where a shown URL is the conventional TrURL)
(1001) A URL input/display field of a Maru-batsu company's top page (where a shown URL is a KURL contains Kanji etc.)
(1002) The Maru-batsu company's top page (where the shown URL is a KURL contains Kanji etc.)
(1004) A link part relating to a sales section at the Maru-batsu company's top page (where the shown URL is a KURL contains Kanji etc.)
(1006) A link part relating to an technical section at the Maru-batsu company's top page (where the shown URL is a KURL contains Kanji etc.)
(1007) A URL input/display field of a sales section's page of the Maru-batsu company (where a shown URL is a KURL contains Kanji etc.)
(1008) The sales section's page of the Maru-batsu company (where the shown URL is a KURL contains Kanji etc.)
(1009) A URL input/display field of a technical section's page of the Maru-batsu company (where a shown URL is a KURL contains Kanji etc.)
(1010) The technical section's page of the Maru-batsu company where the shown URL is a KURL contains Kanji etc.)
(1102) A list of non-graphic characters
(1104) A list of unsafe characters
(1104) A list of reserved characters
(1108) A list of characters which are usable without restriction
(1702) A network interface of a WWW server processing device
(1704) A network
(1706) A CPU (central processing unit) of the WWW server processing device
(1708) A memory of the WWW server processing device
(1710) A display of the WWW server processing device
(1712) A keyboard of the WWW server processing device
(1714) A CD-ROM which recorded a WWW server program
(1716) A CD-ROM drive of the WWW server processing device
(1718) A hard disk of the WWW server processing device
(1720) An OS in the hard disk
(1722) A httpd program in the hard disk
(1724) A working area for httpd program in the hard disk
(1726) Files for opening to the public in the hard disk
(1728) A function expanding program in the hard disk
(1730) A working area for function expanding program in the hard disk
(1802) A URL before dividing
(1804) URL dividing means
(1806) A URL protocol part divided by the URL dividing means
(1808) A URL host part divided by the URL dividing means
(1810) A URL port part divided by the URL dividing means
(1812) A URL path part divided by the URL dividing means
(1902) A part of data of the variable information holding section (which is relating to decisions of access target files)
(1906) A character string of the URL path part come from a WWW client
(1908) A target determing means for accessing
(1910) A character string indicating destination file (in a full path)
(1912) URL path parts (as examples of said 1906)
(1914) Actual accessing files (corresponding to each example shown in said 1912)

### BEST EMBODIMENTS OF THE INVENTION

### (EMBODIMENT 1)

FIG. 2 shows an embodiments of an WWW service using the FxURL complying WWW Server.

WWW clients 202 connected with a LAN 204 are in the condition that they can communicate with WWW servers 210 via WWW relay processing means 206 and the Internet 208.

There are conventional WWW server(s) and FxURL complying WWW server(s) in the WWW server 210. So they are common except for function expanded part(s), they are described not separately except for the function expanded part (s) especially. A prepositional adjective either "conventional" or "FxURL complying" may be put, if necessary. So, as for (one of) WWW servers 210 shown in FIG. 2, there is a case that the WWW server is the conventional WWW server, and, there is a case that the WWW server is the FxURL complying WWW server. However, at least one (1) of WWW servers 210 should be the FxURL complying WWW server.

Two block diagrams, FIG. 6 and FIG. 7, shows components and relations of related data of the WWW server 210. FIG. 6 is for the conventional WWW server. FIG. 7 is for the FxURL complying WWW server.

The WWW server performs its initializing section 608 for doing initialization for itself. After that, it becomes the condition of waiting HTTP request(s) from WWW clients. Wherein a control section 610 controls each processing section and the whole of them. As for the initialization, the WWW server loads performing conditions given at an initializing information holding section 614 and stores them into a variable information holding section 618, if necessary. As a result, Whereabouts of the file holding section 620 and so on may be stored in the variable information holding section 618, wherein the file holding section 620 is stored files should be transmitted (references: FIG. 3A and FIG. 8) toward the WWW client as a HTTP response.

An data receiving section 602 is for taking the HTTP request in from the WWW client (reference: FIG. 3A) as a character string. The character string data taken in such as URL etc. may be stored in the variable information holding section 618.

A control section 1608 passes the data of the URL and related information to a URL interpreting section 606. The URL interpreting section 606 divides the URL 1802 from the receiving data into
a URL protocol part 1806,
a URL host part 1808,
a URL port part 1810 and
a URL path part 1812
by URL dividing means shown in FIG. 18 for the purpose of taking the URL path part and others (reference: FIG. 4).

Sometimes there is a URL that the URL path part of it is omitted. In most cases the URL port part 1810 of it is omitted. In such case, port member 80 is assumed based on HTTP protocol. In many cases the URL protocol part 1806 is "http" but it is "https" in some cases. It means security-enhanced version of HTTP. In a few cases the URL protocol part 1806 is "ftp", "wais", or the like, these are not referred in this embodiment.

Note that some browsers put a prepositional character string like "http://" automatically while entering a URL at the browser's URL input/display field 502 if a URL host part and the following are entered. In such prepositional character string is put, in this invention, it is not obstructed treating of that said character string is entered by a browser's user.

The character string of the URL path part taken by such the way become an information to access an file holding section 620. wherein making "access" means, in many cases, that:
(1) it is an request of reading contents of a specific data file; or
(2) it is an request of executing a specific program file.

When the WWW server accesses a specific file, the WWW server decides whereabouts for an actual accessing file by putting prepositional data, an variable called "document root" (hereinafter referred to as "DocumentRoot") specified by the initializing section 608 held in the variable information holding section and a character of "/" meaning is means an boundary of the directory structure, before the URL path part. This situation is shown in FIG. 19.

And, if an variable called "script alias" (hereinafter referred to as "ScriptAlias") is held in the variable information holding section, the whereabouts for the actual accessing file is decided by performing substitution toward the character string under ScriptAlias's configurations in order to decide whereabouts of an CGI program.

And, if an variable called "directory index" (hereinafter - referred to as "DirectoryIndex") is held in the variable information holding section, an automatic complement of the file name may be done. The variable is set by
index.html
in this embodiment.

If it ends in character "/" which the character string of the URL path part shows the boundary of an directory structure in and if the DirectoryIndex was not set, a file should be accessed actually is judged to be a directory. Thus, the information itself of an index area which shows it in a FIG. 8A is indicated. On the other hand, the DirectoryIndex was set, putting said "/" after the file name hold at variable information holding section (this is called "full path"; reference: 1910 and 1914) and it becomes whereabouts of a file should be accessed actually.

There is an mechanism for the DirectoryIndex and the mechanism is configured as enabled in most WWW servers. So in ordinary way, as shown in FIG. 19, a URL
http://www.any-domain.or.jp/
   and URL
http://www.any-domain.or.jp/index.html
   are equivalent.

After getting character strings of the actual accessing file name (reference: 1910 and 1914), the control section 610 of the WWW server stores in the variable information holding section 618 and tries to access to the target file via the file accessing section 616. Then, the file accessing section 616 gets an storage location (such as posi1 or posl2) of the target file by accessing an index area (reference: FIG. 8A) of the file holding section 620. After that, the file accessing section 616 tries to access the target file (reference: FIG. 8B).

It will be read if the target file is an data file of an text data is image data etc. It will be performed if the target file is an CGI program (and having permission for execution etc.).

A content of the file and a result of processing which are given by above procedures should be transmitted to the WWW client with a data called header as a HTTP response via an data transmitting section 604.

Note that it becomes an error when access to the target file fails. In such a case, an error message generated at error handling section 610 should be transmitted to the WWW client with a header as a HTTP response via an data transmitting section 604.
In many cases, an error message meaning such as "the target file could not accessed" at the receiving data displaying field 504.

The above is the outline of procedures in the conventional WWW server.

In the following, characteristic items are explained in the form of this embodiment about the FxURL complying WWW server. As for the inside composition of the WWW server and the related data etc., FIG. 7 should be referred, and, as for the flow of the processing the FxURL complying WWW server, FIG. 1 should be referred, respectively. No modification of fixed portion(s) is applied for the FxURL complying WWW server described in this embodiment.

The general flow of the explanation is as the next:
(1) preparation for an function expanding part;
(2) setting of data inducing an error;
(3) setting for an branching when the error occurred; and
(4) starting an WWW server comprising the function expanding part etc. and performing for HTTP request(s).

First of all, character string processing means which becomes n function expanding section 702 should be prepared.

Although any thing which doing what kind of processing is good even if they are using a URL path part. It can be given as an example that an character string processing means performing like that:
searching external data base(s) using a character string of the URL path part as a key,
getting an character string which makes a URL as a value corresponding to the key,
transmitting the value to a WWW client with an fixed status code
for causing a URL redirection processing.
   Preparation for the function expanding section 702 ends in above. The function expanding section 702 is not concerned with both fixed portion(s) and nonfixed portion(s); it is provided newly.

Next, setting of data inducing an error should be done.

The data for intentionally causing an error at an error inducing information holding section 706 in the file holding section 620 is set. Concretely, it is set up so that each access - to the file holding section 620 should fall in an error in all cases. This setting can be implemented by using a file so-called access control file which may be referred when the WWW server is running (wherein the file may be stored at the file holding section 620). Although the same setting can be done by using an initializing information holding section 614, it is used that the access control file is stored at the file holding section 620 in this embodiment. The file holding section 620 in FIG. 7 indicates a condition which contains the error inducing information holding section 706.

Next, setting for an branching when the error occurred should be done.

An information relating to an place to be branched to when the error occurred inducing the error inducing information holding section 706 is set at a branch information holding section 704 at the initializing information holding section 614. Concretely, it is set up so that said the function expanding section 702 should become said place to be branched to. This setting can be implemented by using a file so-called configuration file which may be referred when the WWW server is started (wherein the file maybe stored at an area excepting the file holding section 620). The initializing information holding section 614 in FIG. 7 indicates a condition which contains the branch information holding section 704.

Preparation is completion in the above. So, next, the WWW server which comprising the function expanding section etc. (i.e., the FxURL complying WWW server) should be started.

Note that a condition altering section 708 is comprised in this embodiment, modifying the error occurred inducing the error inducing information holding section 706 and/or the branch information holding section 704 can be done by using the condition altering section 708, if necessary.

When the WWW server is started, shown as FIG. 1, initialization may be done. The WWW server does performing such as storing variables necessary for running itself in the variable information holding section 618 (as step S1). After that, the information of the place to be branched to when the error occurred set up in the above should be picked up from the branch information holding section 704 and store it in the variable information holding section 618 (as step 52).

Hereinafter, the WWW server goes in a state that HTTP requests from WWW clients is waited for (as step S3).

When this FxURL complying WWW server actually may take a HTTP request from a WWW client, it may be taken a HTTP request from a WWW client actually, this FxURL complying WWW server may receive information given by the WWW client via the data receiving section 602, and it may take a URL path part etc. via the URL interpreting section 606 (as step S4), and it may store the URL path part etc. in the variable information holding section 618, and it may decide an file should be accessed by using information 1902 such as the DocmentRoot stored in the variable information holding section 618 (as step S5).

After the file should be accessed actually is decided in the way is mentioned, the server will try to access the target file should be in the file holding section 620 via the file accessing section 616 (as step S6). However, this access may fall always (or corresponding to the conditions which may be modified by using the condition altering section 708) in an error (as step S7).

For this reasom, the control section 610 of the WWW server may switch this control to the error handling section 612.

By doing so, the error handling section 612 may pick up the information of the place to be branched to when the error occurred set in the step S2 from the branch information holding section 704 in the variable information holding section 618 and make it branch off to the specified place to be branched (as step S9).

By this, the control may be switched to said character string processing means as the function expanding section 702, an desired character string processing may be performed (as step S10).

This processing for the HTTP request has finished by transmitting the result of said character string processing means to the WWW client which stands the source-side of this HTTP request as an HTTP response via date transmitting section 604 (as step S11).

After that, retuning to the step S3, the next HTTP request may be waited for.

Although the URL redirection is described above as an example of character string processing means in this embodiment, this is an example. For example, the following character string processing means may also be able to implemented like that:
getting a Japanese sentence by writing it in a URL path part; translating it into English; and
displaying an result at the browser's receiving data displaying field 504, URL input/display field 502 or an browser's lower area called like an "status line" (not figured).

And, it may also be able to implemented as character string processing means of:
sending an character string which is expressed in a URL path part,
treating the character string as an destination address and an (short) body of an electronic mail, and
sending it to the destination address.

### (EMBODIMENT 2)

The next example can be given as another example that an error is induced intentionally. Mainly, only the item which is characteristic of this embodiment (EMBODIMENT 2) is described in the following. The description in EMBODIMENT 1 should be referred to for the flow of the whole processing.

When twenty and six (26) files are put under the DocumentRoot and the following HTTP requests
http://www.ox.com/a.html,
http://www.ox.com/p.html and
http://www.ox.com/z.html
   are received, contends of
a.html,
p.html and
z.htm
   should be transmitted naturally as normal cases. Without doing so, an error inducing means for intentionally can be adopted that twenty and three (23) files (d.html - z.html) but three files a.html - c.html are put under an directory excepting the DocumentRoot (such as /httpd/doc2) intentionally.

By doing this, access to d.html - z.html may become error temporarily. As this result, the control of this processing may be switched to the function expanding section via the error handling section.

By this, for example, the following processing can be implemented as a character string processing means for the d.html - z.html:
It reterns a proper document corresponding to the domain name of the access origin WWW client and/or the kind of browsers or difference in the version by using the URL host part, variables describing the kind of browser, and/or etc. stored in the variable information holding section 618. Although this processing has fallen into the error temporarily, after all, necessary data can be transmitted toward the WWW client as a normal end.

### (EMBODIMENT 3)

Mainly, only the item which is characteristic of this embodiment (EMBODIMENT 3) is described in the following. The description in EMBODIMENT 1 should be referred to for the flow of the whole processing.

The next example can be given as another example that an error is induced intentionally. As for further another example that an error is induced intentionally, there is a method that no file should be placed under the DocumentRoot, too. In this case, all the following conditions, i.e.,
(1) in a case of the URL path part is a character string of "sales.html" as a TrURL,
(2) in a case of the URL path part is a character string of " 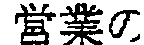 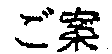 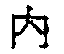 .html" as a FxURL and
(3) in a case of the URL path part is a character string of " 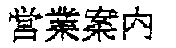 .html" as a FxURL,
   every case may fall into an error like that:
   File Not Found.
It is expected because there is no file under the DocumentRoot at all. If it is a conventional WWW server, such server can not perform a function of providing files for the WWW client. But FxURL complying WWW server is different. The control may be switched to the error handling section 612 temporarily, next, may be switched to the function expanding section 702.

By this, unified processing can be done for all HTTP requests causing file accessing from WWW clients. It is convenient because character string processing such as equating different URLs can be performed easily. As for the above example, even if the URL path part might be
"sales.html",
" 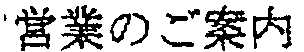 .html" or
" 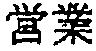 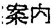 .html",
   the same file can be transmitted toward the WWW client as a HTTP response.

In addition, as a secondary effect, the limitation of the number of the file which can be accommodated in one (1) directory can be actually abolished.

Conventionally, even if mass files-including directories or it is needed to be accommodated, there are limitations originated in specification of OSs' file systems. So, it was difficult for the reason in management to store files can be accommodated within one (1) directory even if possible. Although many Internet providers provide directories for homepages for the members, management is probably that it is difficult caused by the increase in the number of the members, too. Some providers may use plural computers because they can not finish accommodating the members. Then, management may become more difficult, and it may costs a lot.

However, by applying this embodiment, it is possible to build an WWW server such that it gets necessary information from the large data base of the outside for all HTTP requests causing file accessing without restriction of (the URL path part of) the directory structure specified on the WWW client side. So, for example, it can be realized comparatively easily that homepages for 10 million (10,000,000) members will be managed in general. This means that homepages for 10 million (10,000,000) members can be put on one (1) directory virtually. More than 10 million (10,000,000) members' homepage can be put, too, if necessary. It can be said that the limitation of the number of the file which can be accommodated is abolished actually.

To make sure, a difference from prior art is supplemented. When an processing like the above-mentioned is realized, though a form like FIG. 13B (which is substantially the same form as FIG. 13B2 after all) may be able to be realized even so far. By the invention, however, a form like FIG. 13A can be realized.

As a supplement, the following form can be given as a transformation of this embodiment. That is, by a reason of that an special character string processing is not needed for HTTP requests of which URLs are TrURLs, storing files under DocumentRoot as before may be good. Doing like this, it will become possible to perform quickly by the original processing section in the WWW server for HTTP requests of which URLs are TrURLs. On the other hand, for HTTP requests of which URLs are FxURLs including Kanji etc., it will become possible to perform processing of enhancing the function of URLs such as doing interpretation of wild card at the function expanding section.

In addition, contents of the error inducing information holding section 706 in the file holding section 620 will be modified according to the time zone by using the condition altering section 708, it is be able to modify the WWW server's behavior (such as conditions inducing errors) 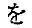 according to the time zone.

An example of an hardware composition of an device which a CPU is used for is shown in FIG. 17, where the processing means which each section which showed it in FIG. 7 is comprised of. Incidentally, it may be good to be composed by hardware logic not by the CPU as for all of or a part of each section shown in FIG. 7.

In FIG. 17,
a network interface 1702,
a memory 1708,
a display 1710,
a keyboard 1712,
a CD-ROM drive 1716 and
a hard disk 1718
are connected with the CPU 1706.

An OS 1720,
a httpd program 1722 which is the indispensable program for an WWW server device,
a working area for httpd program 1724 which various setting information and variables are stored in while the http program is running, and
files for open 1726 which contains information etc. may be provided by the httpd program whenever necessary corresponding to HTTP requests from WWW clients
   are memorized in the hard disk 1718. These are fundamental elements for the WWW server.

And, a function expanding program 1728 and a working area for function expanding program 1730, these should exist only in WWW servers which uses this invention, are also memorized in the hard disk 1718. These are expansive elements for the WWW server.

Characteristic elements for WWW servers in the fundamental elements for the WWW server are the httpd program 1722, the working area for httpd program 1724 and the files for open 1726. Among these, however, the httpd program 1722 is a fixed portion because its source codes compiling may be usually needed for its modifying. It may become a work which takes a man-hour very much to compile the source codes; getting compiler(s) software, getting the source codes, extradting them into hard disk(s), compiling, (re-)installation, etc.

If it can comprise at least one (1) means of error inducing means, character string processing means and branch processing means according to Claim 1 without any modification of fixed portion(s) of the http program 1722, it satisfies Claim 3. If this invention can be applied to commercial WWW servers and if the commercial WWW servers' source codes are not provided, it is a case that they satisfy Claim 3. As even for a kind of programs so-called "free software" whose source codes may be opened to the public generally, if this invention can be applied to them without recompiling of the programs' source codes, it is a case that they satisfy Claim 3.

The elements memorized in the hard disk 1718 are:
(1) installed from a CD-ROM 1714 via the CD-ROM drive 1716; or
(2) installed from a WWW server or a FTP server (which are not figured) on a network 1704 via the network interface 1702.

The data receiving section 1602 of the WWW server receives HTTP requests sent from WWW clients via the network interface 1702 and the OS 1720.

The data transmitting section 1604 of the WWW server transmits data (HTTP responses) as responses to the HTTP requests toward the WWW the clients via the OS 1720 and the network interface 1702.

The URL interpreting section 606 of the WWW server performs operation with the CPU while decomposing URLs and character string data of the URL path part which is obtained through the decomposing URLs should be memorized or memorized temporarily as variables at the working area for httpd program 1724 in the hard disk 1718 or as data in the memory 1708.

The initializing information holding section 614 referred to by the initializing section 608 of the WWW server is realized as a initialization file (another name: configuration file) of the http program 1722. This file is memorized at the working area for httpd program 1724 in the hard disk 1718.

As for modification of the initialization file, an operator with the authority about this WWW server (not figured) can modify contents of the file by using an editor (a text files editing program), etc. included as a part of the OS 1720 while displaying contents of the initialization file on the display 1710 with key entering by the keyboard 1712.

Such modification of contents of the initialization file also can be done by means of a file transferring, etc. from other computers connected with the network 1704 via the network interface 1702.

Files, HTML files (text files), GIF files (image data), etc. transmitted corresponding to HTTP requests from WWW clients, are put under the DocumentRoot. CGI programs are put under the ScriptAlias or the DocumentRoot normally. As for FIG. 7, all of these are contained in the file holding section 620. As for FIG. 17, they are contained in the files for open 1726. A part of the CGI program or all may be put outside the 1726.

The explanation of the elements which are necessary for the WWW server's usual movement is as the above.

And, on an embodiment of an WWW server which carries out this invention, the error inducing information holding section 706 for intentionally causing an error is inserted as a part of the file holding section 620 in file form. This file is called access control file, etc. As for FIG. 17, it should be memorized at a part of the files for open 1726.

On other embodiment of an WWW server which carries out this invention, the error inducing information holding section 706 is inserted into the initializing information holding section 614. In this case, as for FIG. 17, it should be memorized at the working area for httpd program 1724.

In addition, an WWW server which carries out this invention comprises information for deciding the place to be branched when error occurred at the branch information holding section 704. Data pieces which become the base of this information is being decided to be inserted into the initializing information holding section 614 and it is being decided to be memorized at the variable information holding section 618 that is done by a processing of the initializing section 608. In this case, data pieces which become the base of the information of the place to be branched is exist in the initializing file. So, as for FIG. 17, it is being decided to be memorized at the working area for httpd program 1724 .

If, however, complying with Claim 3 is not needed, data can be put to be hold in the branch information holding section 1614 inside the httpd program 1722 by modifying source codes of the httpd program 1722. Otherwise, it can be include functions which can be realized by a function expanding program 1728 said later into the httpd program 1722.

And, an WWW server which carries out this invention comprises the error handling section 612 which is for expanding of the WWW server. The error handling section 612 is memorized as the function expanding program 1728 and the working area for function expanding program 1730 in the hard disk 1718.

In addition, as for the thing which complies with Claim 2 in WWW servers carries out this invention, it comprises the condition altering section 708 as a means for modifying contents of the branch information holding section 704. The condition altering section 708 is a thing for modifying the branch information holding section 704 or an equivalent section in said access control file, an file provides the equivalent function of it, or etc.

In said embodiment, the CD-ROM drive 1716, the display 1710 and the keyboard 1712 are used. However, all works including the installation of files into the hard disk 1718, works such as the modification of files in the hard disk 1718, watching and managing for the httpd program 1722 and the whole the WWW server, etc. will be processed remotely (that is a remote processing) from other computers (not figured) which can be connected the network 1704 via the network interface 1702, it doesn't need to comprise the CD-ROM drive 1716, the display 1710 and the keyboard 1712.

### EXPLOITATION IN INDUSTRY

To be clear from the explanation by this, the expression of URL and utility can be enhanced drastically by doing the interpretation of URL in the WWW server flexibly. There is effect which lowers a barrier to use the service of the Internet at the same time, too. The service which brings an advantage to both the present Internet user and the future Internet user by this multiplier effect can be provided. And, because it can be applied besides the WWW server, it probably goes to the field, and it can get effect.

## Claims

1. A function expanding device comprising
an error inducing means for intentionally causing an error when a conventional WWW server processes a URL,
a character string processing means which carries out a processing by using at least a URL path part of data which said conventional WWW server stores in a memory means, and
a branch processing means which makes the process branch off from said conventional WWW server into said character string processing means when the error is caused by said error inducing means.

2. A function expanding device comprising
an error inducing means for intentionally causing an error when a conventional WWW server processes a URL,
a character string processing means which carries out a processing by using at least a URL path part of data which said conventional WWW server stores in a memory means, and
a branch processing means which makes the process branch off from said conventional WWW server into said character string processing means when the error is caused by said error inducing means;
wherein the function expanding device further comprises a condition modifying means which alters the degree and timing etc. of errors caused by Said error inducing means.

3. A function expanding device according to Claim 1 or Claim 2, said function expanding device comprising one, two or more means among said error induding means, said character string processing means and said branch processing means, without modifying fixed portion(s) of the conventional WWW server.

4. A function expanding device according to Claim 1 or Claim 2, wherein:
the URL which contains said URL path part stems from the client-side inputted character string which is entered in a URL input/display field (502) of a WWW client, and
said character strin processing means comprising a acquisition means for acquiring said client-side inputted character string with the same expression of the form when it is inputted except for portion (s) which cannot be transmitted by any form toward WWW server(s).

5. A function expanding device according to Claim 1 or Claim 2, wherein:
the URL which contains said URL path part
stems from the client-side inputted character string which is entered or set up by the methods other than entering in a URL input/display field (502) of a WWW client, and
said character string processing means comprising a acquisition means for acquiring said client-side inputted character string with the same expression of the form when it is inputted except for portion(s) which cannot be transmitted by any form toward WWW server(s).

6. A function expanding device according to Claim 4 or Claim 5, wherein:
said URL path part contains Kanji, Hiragana or Katakana but does not contain a character string which is defined as a indicator for transmitting parameter(s) to CGI programs etc. by RFCs as far as the character string is used in the meaning as its definition.

7. A function expanding device according to Claim 4 or Claim 5, wherein said URL path part includes at least one item selected from the group consisting of the following items (i), (ii) and (iii):
(i) it contains Japanese or a word or phrase in different nation(s) or region(s),
(ii) it contains an expression using symbols etc. which are used in specific scientific fields etc., or
(iii) it contains a command of the computer language or data.

8. A function expanding device according to Claim 4 or Claim 5, wherein
said URL path part contains a character string which instructs searching.

9. A function expanding device according to Claim 4 or Claim 5, wherein said character string processing means comprises at least one of the following items:
(i) a special character string normalize interpretation means which processes at least one of character strings which are given special meaning by RFCs, as initial character data; or
(ii) a normal character string specialize interpretation means which processes a character string defined in advance or defined at any time, as in the case of character string which is given special meaning by RFCs.

10. A function expanding device comprising
an error inducing means processing step for intentionally causing an error when an existent information processing means carries out information processing,
an external information processing means which carries out a processing outside said existent information processing means using a part or all of the information processing results obtained by said existent information processing means, and
a branch processing means which makes the process branch off from said existent information processing means into the external information processing means when the error is caused by said error inducing means.

11. A function expanding device according to Claim 10 comprising a condition modifying means which alters the degree and timing etc. of errors caused by said error inducing means.

12. A function expanding method comprising
an error-induction setting-up step for intentionally causing an error when a conventional WWW server processes a URL,
a character string processing step which carries out a processing by using at least a URL path part among data which said conventional WWW server stores in a memory section, and
a branch processing step which makes the process branch off from said conventional WWW server into said character string processing step when the error is caused by said error-induction setting-up step.

13. A recording medium recorded with a function expanding program comprising
an error-induction setting-up step for intentionally causing an error when a conventional WWW server processes a URL,
a character string processing step which carries out a processing by using at least a URL path part among data which said conventional WWW server stores in a memory section, and
a branch processing step which makes the process branch off from said conventional WWW server into said character string processing step when the error is caused by said error-induction setting-up step.

14. A function expanding device comprising
an external information processing means which carries out a processing outside said existent information processing means using a part or all of the information processing results obtained by said existent information processing means when an existent information processing means carries out information processing, and
a branch processing means which makes the process branch off from said existent information processing means into the external information processing means when an error is caused.

15. A function expanding device comprising
a character string processing means which carries out a processing by using a part or all of data which a conventional WWW server stores in a memory means when the conventional WWW server processes a URL, and
a branch processing means which makes the process branch off from said conventional WWW server into said character string processing means when an error is caused.
